# EUROPEAN PATENT APPLICATION

(11) **EP 4 180 210 A1**
(43) Date of publication of application: **17.05.2023**
(21) Application number: 21838858.5
(22) Date of filing: 01.07.2021
(51) Int. Cl.: B29C 64/153, B29C 64/264, B33Y 10/00, B33Y 80/00

(54) **THREE-DIMENSIONAL MOLDED PRODUCT**

(30) Priority: 09.07.2020 JP 2020118543
(71) Applicant: Daikin Industries, Ltd., Osaka-shi, Osaka 530-0001 (JP)
(72) Inventor: KOMORI, Hirokazu, Osaka-shi, Osaka 530-0001 (JP); SENDAN, Hiroyuki, Osaka-shi, Osaka 530-0001 (JP); FUKAGAWA, Yukihiro, Osaka-shi, Osaka 530-0001 (JP); MURAYAMA, Kenta, Osaka-shi, Osaka 530-0001 (JP); TERADA, Junpei, Osaka-shi, Osaka 530-0001 (JP)
(74) Representative: Hoffmann Eitle
(86) International application number: PCT/JP2021/025002
(87) International publication number: WO 2022/009781

(57) **Abstract**

The present invention provides a three-dimensional shaped object comprising a fluororesin, wherein the three-dimensional shaped object has a tensile stress at break of 9 MPa or more.

## Description

### Technical Field

The present disclosure relates to three-dimensional shaped objects.

### Background Art

In recent years, three-dimensional shaping devices what are called 3D printers have increasingly attracted attention as a technique for shaping three-dimensional structures. For example, powder bed fusion or the like is a known method of three-dimensional shaping, in which a powder material is irradiated with an energy beam to selectively melt and solidify or sinter the material for shaping.

Meanwhile, a fluororesin has unparalleled excellent properties in terms of heat resistance, chemical resistance, and so forth. Accordingly, three-dimensional shaped objects made of the fluororesin have increasingly attracted attention. For example, Patent Literature 1 describes such a three-dimensional shaped object of a fluororesin.

### Citation List

### Patent Literature

Patent Literature 1 JP2019-194019A

### Summary of Invention

### Technical Problem

It is an object of the present disclosure to provide a three-dimensional shaped object of a fluororesin which has excellent mechanical properties.

### Solution to Problem

The present disclosure encompasses the following embodiments:
[1] A three-dimensional shaped object comprising a fluororesin, wherein the three-dimensional shaped object has a tensile stress at break of 9 MPa or more.
[2] The three-dimensional shaped object according to the above [1], wherein the tensile stress at break is 10 MPa or more.
[3] The three-dimensional shaped object according to the above [1] or [2], wherein the tensile stress at break is 19 MPa or more.
[4] The three-dimensional shaped object according to any one of the above [1] to [3], wherein the three-dimensional shaped object has a tensile elongation at break of 5% or more.
[5] The three-dimensional shaped object according to any one of the above [1] to [4], wherein the tensile elongation at break is 20% or more.
[6] The three-dimensional shaped object according to any one of the above [1] to [5], wherein the tensile elongation at break is 200% or more.
[7] The three-dimensional shaped object according to any one of the above [1] to [6], wherein the three-dimensional shaped object has a surface roughness of 30 µm or less.
[8] The three-dimensional shaped object according to any one of the above [1] to [7], wherein the three-dimensional shaped object is subjected to punching after three-dimensional shaping.
[9] The three-dimensional shaped object according to any one of the above [1] to [8], wherein the fluororesin has an MFR of 0.1 g/10 mins or more.
[10] The three-dimensional shaped object according to any one of the above [1] to [9], wherein the fluororesin is a tetrafluoroethylene-perfluoroalkoxyethylene copolymer, a tetrafluoroethylene-hexafluoropropylene copolymer, or an ethylene-tetrafluoroethylene copolymer.
[11] A method for producing a three-dimensional shaped object containing a fluororesin, comprising:
   shaping a fluororesin powder by powder bed fusion.
[12] The method for producing the three-dimensional shaped object according to the above [10], comprising punching after the shaping by powder bed fusion.
[13] The method for producing the three-dimensional shaped object according to the above [11] or [12], comprising annealing after the shaping by powder bed fusion.
[14] The method for producing the three-dimensional shaped object according to any one of the above [11] to [13], wherein the fluororesin powder is an unmelted fluororesin powder that is subjected to another shaping by powder bed fusion and collected.
[15] The method for producing the three-dimensional shaped object according to any one of the above [11] to [14], wherein the fluororesin has an MFR of 0.1 g/10 mins or more.
[16] The method for producing the three-dimensional shaped object according to any one of the above [11] to [15], wherein the fluororesin is a tetrafluoroethylene-perfluoroalkoxyethylene copolymer, a tetrafluoroethylene-hexafluoropropylene copolymer, or an ethylene-tetrafluoroethylene copolymer.

### Advantageous Effect of Invention

The three-dimensional shaped object of the present disclosure has excellent mechanical properties.

### Description of Embodiments

The three-dimensional shaped object of the present disclosure will be described below.

The term "three-dimensional shaped object" used herein refers to a model shaped object produced with a three-dimensional shaping device.

The three-dimensional shaped object of the present disclosure has a tensile stress at break of 9 MPa or more, preferably 10 MPa or more, and more preferably 20 MPa or more. The tensile stress at break is preferably as high as possible; for example, the upper limit of the tensile stress at break may be, but is not limited to, 100 MPa or less.

The tensile stress at break may be either the tensile stress at break in the direction perpendicular or parallel to the shaped plane and is preferably the tensile stress at break in the direction perpendicular to the shaped plane.

The tensile stress at break is measured with a Tensilon universal testing machine (RTC-1225A manufactured by ORIENTIC CORPORATION) with 22.5 mm between chucks at a crosshead speed of 50 mm/min in accordance with ASTM D3307, and measurements of five tensile tests are averaged.

In one embodiment, the three-dimensional shaped object of the present disclosure has a tensile elongation at break of preferably 5% or more, more preferably 20% or more, and still more preferably 200% or more. The tensile elongation at break is preferably as high as possible; for example, the upper limit of the tensile elongation at break may be, but is not limited to, 1,000% or less.

The tensile elongation at break may be either the tensile elongation at break in the direction perpendicular or parallel to the shaped plane and is preferably the tensile elongation at break in the direction perpendicular to the shaped plane.

The tensile elongation at break is measured with a Tensilon universal testing machine (RTC-1225A manufactured by ORIENTIC CORPORATION) with 22.5 mm between chucks at a crosshead speed of 50 mm/min in accordance with ASTM D3307, and measurements of five tensile tests are averaged.

In one embodiment, the three-dimensional shaped object of the present disclosure has a tensile stress at yield of preferably 9 MPa or more, more preferably 10 MPa or more, and still more preferably 13 MPa or more. The tensile stress at yield is preferably as high as possible; for example, the upper limit of the tensile stress at yield may be, but is not limited to, 100 MPa or less.

The tensile stress at yield may be either the tensile stress at yield in the direction perpendicular or parallel to the shaped plane and is preferably the tensile stress at yield in the direction perpendicular to the shaped plane.

The tensile stress at yield is measured with a Tensilon universal testing machine (RTC-1225A manufactured by ORIENTIC CORPORATION) with 22.5 mm between chucks at a crosshead speed of 50 mm/min in accordance with ASTM D3307, and measurements of five tensile tests are averaged.

In one embodiment, the three-dimensional shaped object of the present disclosure has a tensile elongation at yield of preferably 5% or more, more preferably 7% or more, and still more preferably 9% or more. The tensile elongation at yield is preferably as high as possible; for example, the upper limit of the tensile elongation at yield may be, but is not limited to, 100% or less.

The tensile elongation at yield may be either the tensile elongation at yield in the direction perpendicular or parallel to the shaped plane and is preferably the tensile elongation at yield in the direction perpendicular to the shaped plane.

The tensile elongation at yield is measured with a Tensilon universal testing machine (RTC-1225A manufactured by ORIENTIC CORPORATION) with 22.5 mm between chucks at a crosshead speed of 50 mm/min in accordance with ASTM D3307, and measurements of five tensile tests are averaged.

In one embodiment, the three-dimensional shaped object of the present disclosure has an elastic modulus of preferably 200 MPa to 800 MPa, and more preferably 300 MPa to 600 MPa.

The elastic modulus may be either the elastic modulus in the direction perpendicular or parallel to the shaped plane and is preferably the elastic modulus in the direction perpendicular to the shaped plane.

The elastic modulus is measured with a Tensilon universal testing machine (RTC-1225A manufactured by ORIENTIC CORPORATION) with 22.5 mm between chucks at a crosshead speed of 50 mm/min in accordance with ASTM D3307, and measurements of five tensile tests are averaged.

In one embodiment, the three-dimensional shaped object of the present disclosure has a surface roughness (Ra) of preferably 30 µm or less, more preferably 15 µm or less, and still more preferably 5 µm or less. The surface roughness is preferably as small as possible; for example, the lower limit of the surface roughness may be, but is not limited to, 0.05 µm or more. Reducing the surface roughness of the three-dimensional shaped object to 5 µm or less increases the mechanical properties of the three-dimensional structure, particularly a tensile stress at break, a tensile elongation at break, a tensile stress at yield, a tensile elongation at yield, and the like.

The surface roughness (Ra) is measured in accordance with JIS B 0601-2001.

The three-dimensional shaped object of the present disclosure is obtained by shaping a shaping material containing powder of a fluororesin into an object by powder bed fusion.

The fluororesin is a fluororesin that can be used in the powder bed fusion, that is, a fluororesin that can melt and is not otherwise limited. Preferably, the fluororesin may be a thermoplastic fluororesin that can be melted by an energy beam, for example, from various types of lasers, such as CO₂ lasers, fiber lasers, and YAG lasers, and preferably CO₂ lasers.

The fluororesin may contain one or more selected from fluorine-containing olefin units, such as a tetrafluoroethylene (TFE) unit, a chlorotrifluoroethylene (CTFE) unit, a vinyl fluoride (VF) unit, a vinylidene fluoride (VDF) unit, a hexafluoropropylene (HFP) unit, a trifluoroethylene (TrFE) unit, and a perfluoro(alkyl vinyl ether) (PAVE) unit; and a fluorine-containing dioxole. In one embodiment, PAVE units include perfluoro(methyl vinyl ether) units and perfluoro(propyl vinyl ether) units. Fluorine-free olefin units include a hydrocarbon-based monomer reactive to the fluoroolefin. The hydrocarbon-based monomer is preferably at least one fluorine-free olefin unit selected from the group consisting of, for example, alkenes, alkyl vinyl ethers, vinyl esters, alkyl allyl ethers, and alkyl allyl esters.

In one embodiment, examples of the fluororesin include tetrafluoroethylene-perfluoroalkoxyethylene copolymers (PFA), tetrafluoroethylene-hexafluoropropylene copolymers (FEP), ethylene-tetrafluoroethylene copolymers (ETFE), NEOFLON EFEP (trademark), tetrafluoroethylene-hexafluoropropylene-perfluoro(alkyl vinyl ether) copolymers (PAVE), polychlorotrifluoroethylene (PCTFE), chlorotrifluoroethylene-tetrafluoroethylene copolymers, ethylene-chlorotrifluoroethylene copolymers, tetrafluoroethylene-vinylidene fluoride copolymers, vinylidene fluoride-hexafluoropropylene-tetrafluoroethylene copolymers, and vinylidene fluoride-hexafluoropropylene copolymers. These fluororesins may be used individually or in combination of two or more.

In a preferred embodiment, the fluororesin may be, for example, a tetrafluoroethylene-perfluoroalkoxyethylene copolymer (PFA), a tetrafluoroethylene-hexafluoropropylene copolymer (FEP), or an ethylene-tetrafluoroethylene copolymer (ETFE). These fluororesins may be used individually or in combination of two or more. Preferably, one of these fluororesins is used alone.

The number average molecular weight of the fluororesin may be, but is not limited to, 100,000 to 10,000,000 and preferably 500,000 to 5,000,000, for example. In a preferred embodiment, the molecular weight of the fluororesin may be relatively low and, for example, 3,000,000 or less, 2,000,000 or less, or 1,000,000 or less because the shaping material of the present disclosure can be used in powder bed fusion. Use of a low-molecular-weight fluororesin increases the mechanical strength of the shaped three-dimensional structure.

The melting point of the fluororesin may be, but is not limited to, 100°C to 350°C and preferably 150°C to 330°C, for example. Use of a fluororesin with a melting point of 100°C or more increases the heat resistance of the shaped three-dimensional structure. Additionally, use of a fluororesin with a melting point of 350°C or less can reduce the shaping temperature.

The melt flow rate (MFR) of the fluororesin may be, but is not limited to, 0.1 g/10 mins or more, preferably 5 g/10 mins or more, and still more preferably 10 g/10 mins or more, for example. The upper limit of the MFR may be, but is not limited to, 100 g/10 mins or less, for example. Use of a fluororesin with an MFR of 10 g/10 mins or more improves the mechanical properties of the three-dimensional structure, particularly a tensile stress at break, a tensile elongation at break, a tensile stress at yield, a tensile elongation at yield, and the like.

In the present disclosure, the fluororesin contained in the shaping material is in the form of powder.

The fluororesin powder preferably has a D50 of 30 µm or more and 200 µm or less, and a D10 of 12 µm or more.

In one embodiment, the D50 of the fluororesin powder may be 30 µm or more and 200 µm or less, preferably 30 µm or more and 100 µm or less, more preferably 40 µm or more and 100 µm or less, still more preferably 40 µm or more and 80 µm or less, and particularly preferably 50 µm or more and 70 µm or less. Use of a fluororesin with a D50 of 30 µm or more increases the flowability of the shaping material and facilitates the formation of uniform thin layers. Use of a fluororesin with a larger D50 can further increase the flowability of the shaping material. Also, use of a fluororesin with a D50 of 200 µm or less enables the shaped three-dimensional structure to have a smooth surface easily. Use of the fluororesin with a smaller D50 enables the three-dimensional structure to have a smoother surface easily.

In one embodiment, the D10 of the fluororesin powder may be 12 µm or more, preferably 13 µm or more, more preferably 15 µm or more, and still more preferably 17 µm or more. Use of a fluororesin powder with a D10 of 12 µm or more increases the flowability of the shaping material and facilitates the formation of uniform thin layers. Use of a fluororesin powder with a larger D10 can further increase the flowability of the shaping material. Also, the upper limit of the D10 of the fluororesin powder is preferably as close to D50 as possible and is not limited. The fluororesin with a D10 closer to D50 increases the flowability of the shaping material and facilitates the formation of uniform thin layers. For example, the D10 of the fluororesin powder may be 50 µm or less, 30 µm or less, or 20 µm or less.

In a preferred embodiment, the fluororesin powder has a D50 of 50 µm or more and 70 µm or less, and a D10 of 17 µm or more.

In one embodiment, the D90 of the fluororesin powder may be preferably 50 µm or more and 500 µm or less, more preferably 60 µm or more and 200 µm or less, still more preferably 80 µm or more and 150 µm or less, and particularly preferably 90 µm or more and 130 µm or less. Use of a fluororesin powder with a D90 of 50 µm or more increases the flowability of the shaping material and facilitates the formation of uniform thin layers. Use of the fluororesin powder with a larger D90 can further increase the flowability of the shaping material. Also, use of a fluororesin powder with a D90 of 500 µm or less enables the shaped three-dimensional structure to have a smooth surface easily. Use of a fluororesin powder with a smaller D90 enables the three-dimensional structure to have a smoother surface easily.

In a preferred embodiment, the fluororesin powder has a D50 of 50 µm or more and 70 µm or less, a D10 of 17 µm or more, and a D90 of 130 µm or less.

The above-mentioned "D10", "D50", and "D90" are what are called cumulative volume particle diameters and refer to cumulative values at points in ascending order of 10%, 50%, and 90%, respectively, on a cumulative curve of a particle size distribution obtained on a volume basis, wherein the total volume is 100%. In the present disclosure, the particle diameters are measured by laser diffraction.

In one embodiment, the static bulk density of the fluororesin powder may be preferably 0.850 g/ml or more and 1.500 g/ml or less, more preferably 0.900 g/ml or more and 1.300 g/ml or less, and still more preferably 0.950 g/ml or more and 1.100 g/ml or less. Increasing the static bulk density of the fluororesin powder to 0.850 g/ml or more can reduce the volume change when the fluororesin is melted and shaped. Further increasing the static bulk density of the fluororesin can further reduce the volume change in shaping. Also, use of a fluororesin powder with a static bulk density of 1.500 g/ml or less increases the flowability of the shaping material and facilitates the formation of uniform thin layers. Use of a fluororesin with a smaller static bulk density can further increase the flowability of the shaping material. In the present disclosure, the static bulk density is measured by the method specified in JIS K 6891.

In one embodiment, the Hausner ratio of the fluororesin powder may be preferably 1.10 or more and 1.30 or less, and more preferably 1.20 or more and 1.25 or less. Use of a fluororesin powder with a Hausner ratio in such a range increases the flowability of the shaping material and facilitates the formation of uniform thin layers. The "Hausner ratio" refers to a ratio represented by tapped density/static bulk density. In the present disclosure, the Hausner ratio is measured with a powder tester (manufactured by Hosokawa Micron Corporation).

In one embodiment, the sphericity of the fluororesin powder may be preferably 0.60 or more, more preferably 0.60 or more and 0.98 or less, still more preferably 0.70 or more and 0.95 or less, and still further preferably 0.80 or more and 0.95 or less. Use of a fluororesin powder with a sphericity in such a range increases the flowability of the shaping material and facilitates the formation of uniform thin layers. The term "sphericity" implies the deviation from a perfect sphere of a powder and is the average of the ratios (largest diameter/small diameter) of the largest diameter to the small diameter perpendicular to the largest diameter of each particle of randomly selected 50 particles in a photographic projection obtained by taking a photograph under a transmission electron microscope. The closer the sphericity is to 1, the closer to a perfect sphere.

In another preferred embodiment, the shaping material of the present disclosure comprises the fluororesin powder.

The shaping materials used in the three-dimensional shaped object of the present disclosure may contain materials other than the fluororesin powder.

Examples of other materials include shaping aids, such as silica (SiO₂) (e.g., silica particles and silica glass fiber), carbon fiber, graphite, carbon nanotubes, carbon nanohorns, fullerenes, aluminum oxide, clay, montmorillonite, and talc. Addition of shaping aids, particularly silica, to the shaping material of the present disclosure improves the flowability and shapability of the shaping material.

In a preferred embodiment, the shaping material may be a mixture of a fluororesin material and silica.

The silica content may be preferably 0.1% by mass to 1.0% by mass, more preferably 0.1% by mass to 0.5% by mass, and still more preferably 0.1% by mass to 0.3% by mass relative to the total mass of the shaping material. Addition of 0.1% by mass or more of silica improves the flowability and shapability of the shaping material. More silica content improves further the flowability and shapability of the shaping material as well as the mechanical strength of the three-dimensional structure. Also, limiting the silica content to 1.0% by mass or less ensures a sufficient fluororesin content and allows the fluororesin to satisfactorily exhibit the properties of the fluororesin in the three-dimensional structure.

The silica preferably has a similar particle diameter to the fluororesin.

Another material may be a laser-absorbing colorant. The laser-absorbing colorant is not limited as long as it can absorb laser light with a wavelength of about 1 µm or about 10 µm, and may be carbon, a metal, a pigment or a dye. Preferably, carbon is used as the main constituent. Preferably, the laser-absorbing colorant has an average particle diameter of about 10 µm, and its particle diameters range from 2 µm to 40 µm. Preferably, the content of the laser-absorbing colorant in the shaping material is, for example, in the range of 0.05% by mass to 0.20% by mass.

In one embodiment, the D50 of the particles of the above-described silica may be 30 µm to 200 µm, preferably 30 µm to 100 µm, more preferably 40 µm to 100 µm, still more preferably 40 µm to 80 µm, and particularly preferably 50 µm to 70 µm.

The three-dimensional shaped object of the present disclosure is obtained by shaping a shaping material containing a fluororesin powder into an object by powder bed fusion, as described above.

Accordingly, the present disclosure provides a method for producing a three-dimensional shaped object containing a fluororesin, including a step of shaping a fluororesin powder into an object by powder bed fusion.

The shaping device using the powder bed fusion typically includes powder containers containing the shaping material on both sides of a shaping table on which shaping is performed. The shaping device further includes a recoater to feed the shaping material in the powder container onto the shaping table to form a thin layer, and a laser section to irradiate the thin layers with laser light.

First, the powder container receives a required amount of shaping material. Then, the shaping table is lowered by a height corresponding to the thickness of the thin layer. On the other hand, the bottom of the powder container is raised to lift an appropriate amount of the shaping material to an upper position in the powder container. The shaping material is transported onto the shaping table by the recoater, and the recoater is moved to level off the surface of the shaping material, thus forming a thin layer on the shaping table. Then, laser light is scanned the thin layer according to the slice data of the three-dimensional structure to melt and bind, and solidify the powder. By repeating this sequence of operations, layers corresponding to slice data are formed one after another to shape a three-dimensional structure.

Preferably, the temperature of the powder in the powder containers, which are the feeding areas, and the temperature of the powder on the shaping table, which is the shaping area, are appropriately controlled for shaping according to the shaping material to be used. Controlling these temperatures enables the formation of more uniform thin layers and more precise shaping.

In one embodiment, the lower limit of the energy density of laser light emitted is 0.01 J/mm³, preferably 0.05 J/mm³, and more preferably 0.10 J/mm³. The upper limit is in a range of energies at which the resin is not decomposed and is, for example, 10.00 J/mm³, and preferably 5.00 J/mm³. Laser irradiation at an energy density in such a range improves the mechanical properties of the resulting three-dimensional shaped object.

In one embodiment, an annealing step is performed after the shaping step. Annealing enhances the interlayer strength and improves the mechanical properties of the resulting three-dimensional shaped object.

The temperature for the annealing can be a temperature or less at which the shape of the three-dimensional shaped object can be maintained and may be, for example, 100°C to 500°C, preferably 150°C to 400°C, and more preferably 200°C to 350°C.

The duration of the annealing may be, but is not limited to, 1 min to 120 mins, and preferably 10 mins to 60 mins.

In one embodiment, punching is performed after shaping the shaping material into a predetermined shape. The punching step performed after the shaping step smoothens the surface of the resulting three-dimensional shaped object and improves the mechanical properties of the three-dimensional shaped object.

In one embodiment, both the annealing step and the punching step are performed after the shaping step. The order of the annealing step and punching step is not limited, and the punching step may be performed after the annealing step, or the annealing step may be performed after the punching step.

In one embodiment, the fluororesin powder used for shaping may be collected from an unmelted fluororesin powder used in another shaping step performed by powder bed fusion. For example, the fluororesin powder may be an unmelted portion, collected and optionally subjected to sieving with a shifter, of the fluororesin that has been used to form a layer on the shaping area but not melted due to no laser irradiation or a mixture of powder unused for shaping and the collected powder in a predetermined proportion by means of a mixer. Even reuse of a fluororesin powder, as described above, can produce substantially the same mechanical strength as in the case where the fluororesin powder is not reused.

### Examples

### Example 1

PFA powder was prepared as the fluororesin. The PFA powder had a MFR of 25.5 g/10 mins. The powder was shaped into a dumbbell-like form (1.5 mm thick) specified in ASTM D1708 with a powder bet fusion 3D printer. The shaping conditions were as follows:

### Shaping Conditions

Shaping temperature: feeding area, 260°C; shaping area, 280°C
Energy density: 0.10 J/mm³

### Example 2

A three-dimensional shaped object was obtained in the same manner as in example 1, except that the object was annealed at 310°C for 30 mins after shaping as in example 1.

### Example 3

A three-dimensional shaped object was obtained in the same manner as in example 1, except that the energy density was varied to 0.14 J/mm³.

### Example 4

A three-dimensional shaped object was obtained by shaping into a sheet-like form under the same conditions as in example 1 and then punching the sheet-like form into the dumbbell-like form (1.5 mm thick) specified in ASTM D1708.

### Example 5

A three-dimensional shaped object was obtained under the same conditions as in example 1, reusing the powder that had been used in the shaping step of example 1 but had not been irradiated with laser light in the shaping portion.

### Example 6

A three-dimensional shaped object was obtained by shaping into a sheet-like form under the same conditions as in example 5 and then punching the sheet-like form into the dumbbell-like form (1.5 mm thick) specified in ASTM D1708.

### Example 7

FEP powder was prepared as the fluororesin. The FEP powder had a MFR of 24.8 g/10 mins. The powder was shaped into a dumbbell-like form (1.5 mm thick) specified in ASTM D1708 with a powder bet fusion 3D printer. The shaping conditions were as follows:

### Shaping Conditions

Shaping temperature: feeding area, 220°C; shaping area, 240°C
Energy density: 0.11 J/mm³

### <Evaluation>

The samples obtained in the above-described examples 1 to 7 were subjected to measurements to determine the elastic modulus, tensile stress at yield, tensile elongation at yield, tensile stress at break, and tensile elongation at break. The tensile conditions were set at 24°C and a speed of 50 mm/min. The results are presented in the following table. The XY direction is parallel to the shaped plane of the three-dimensional structure, and the Z direction is perpendicular to the shaped plane.

**[Table 1]**

| Item | Unit | Example | | | | | | | |
|---|---|---|---|---|---|---|---|---|---|
| | | 1 | | 2 | 3 | 4 | 5 | 6 | 7 |
| Tensile direction | | XY | Z | Z | Z | XY | XY | XY | XY |
| Elastic modulus | MPa | 416 | 372 | 406 | 404 | 473 | 401 | 512 | 388 |
| Stress at yield | MPa | 12.3 | 9.4 | 10.5 | 11.8 | 13.4 | 12.7 | 13.9 | 11.9 |
| Elongation at yield | % | 6.9 | 5.8 | 9.5 | 7.0 | 7.0 | 7.5 | 7.5 | 6.8 |
| Stress at break | MPa | 14.1 | 9.4 | 10.9 | 13 | 19.7 | 14.5 | 21.0 | 13.6 |
| Elongation at break | % | 176 | 6.3 | 23 | 157 | 294 | 174 | 301 | 140 |

The above results show that the three-dimensional structure of the present disclosure has good mechanical properties. In particular, examples 2 and 4, in which the annealing step or the punching step was performed after the shaping step, and example 3, in which the energy density was increased, exhibited particularly good mechanical properties. Additionally, example 5, which reused a fluororesin powder, exhibited similar mechanical properties to example 1, which used unused powder. Also, example 6, which reused a fluororesin powder and performed the punching step, exhibited improved mechanical properties as example 4, which used unused powder. The results of example 7 show that the same effects as example 1 can be obtained even when the fluororesin powder is changed to another fluororesin powder.

### Industrial Applicability

The three-dimensional shaped object of the present disclosure has excellent mechanical properties and accordingly can be suitably used in various applications.

## Claims

1. A three-dimensional shaped object comprising a fluororesin, wherein the three-dimensional shaped object has a tensile stress at break of 9 MPa or more.

2. The three-dimensional shaped object according to claim 1, wherein the tensile stress at break is 10 MPa or more.

3. The three-dimensional shaped object according to claim 1 or 2, wherein the tensile stress at break is 19 MPa or more.

4. The three-dimensional shaped object according to any one of claims 1 to 3, wherein the three-dimensional shaped object has a tensile elongation at break of 5% or more.

5. The three-dimensional shaped object according to any one of claims 1 to 4, wherein the tensile elongation at break is 20% or more.

6. The three-dimensional shaped object according to any one of claims 1 to 5, wherein the tensile elongation at break is 200% or more.

7. The three-dimensional shaped object according to any one of claims 1 to 6, wherein the three-dimensional shaped object has a surface roughness of 30 µm or less.

8. The three-dimensional shaped object according to any one of claims 1 to 7, wherein the three-dimensional shaped object is subjected to punching after three-dimensional shaping.

9. The three-dimensional shaped object according to any one of claims 1 to 8, wherein the fluororesin has an MFR of 0.1 g/10 mins or more.

10. The three-dimensional shaped object according to any one of claims 1 to 9, wherein the fluororesin is a tetrafluoroethylene-perfluoroalkoxyethylene copolymer, a tetrafluoroethylene-hexafluoropropylene copolymer, or an ethylene-tetrafluoroethylene copolymer.

11. A method for producing a three-dimensional shaped object containing a fluororesin, comprising:
shaping a fluororesin powder by powder bed fusion.

12. The method for producing the three-dimensional shaped object according to claim 11, comprising punching after the shaping by powder bed fusion.

13. The method for producing the three-dimensional shaped object according to claim 11 or 12, comprising annealing after the shaping by powder bed fusion.

14. The method for producing the three-dimensional shaped object according to any one of claims 11 to 13, wherein the fluororesin powder is an unmelted fluororesin powder that is subjected to another shaping by powder bed fusion and collected.

15. The method for producing the three-dimensional shaped object according to any one of claims 11 to 14, wherein the fluororesin has an MFR of 0.1 g/10 mins or more.

16. The method for producing the three-dimensional shaped object according to any one of claims 11 to 15, wherein the fluororesin is a tetrafluoroethylene-perfluoroalkoxyethylene copolymer, a tetrafluoroethylene-hexafluoropropylene copolymer, or an ethylene-tetrafluoroethylene copolymer.
